# EUROPÄISCHE PATENTSCHRIFT

(11) **EP 4 201 501 B1**
(45) Veröffentlichungstag und Bekanntmachung des Hinweises auf die Patenterteilung: **23.04.2025**
(21) Anmeldenummer: 22212723.5
(22) Anmeldetag: 12.12.2022
(51) Int. Cl.: B01D 21/00, B01D 21/04, B01D 21/24, B01D 21/26, B01D 43/00

(54) **BATCH-OFF ANLAGE MIT EINEM REINIGUNGSSYSTEM ZUR ABSCHNITTSWEISEN REINIGUNG DER BATCH-OFF ANLAGE UND VERFAHREN ZUR ABSCHNITTSWEISEN REINIGUNG IN EINER BATCH-OFF ANLAGE MIT EINEM REINIGUNGSSYSTEM**
BATCH-OFF SYSTEM WITH A CLEANING SYSTEM FOR BATCH-OFF CLEANING, AND METHOD FOR BATCH-OFF CLEANING IN A BATCH-OFF SYSTEM WITH A CLEANING SYSTEM
INSTALLATION DE TREMPE PAR LOTS POURVUE D'UN SYSTÈME DE NETTOYAGE DESTINÉ AU NETTOYAGE PAR LOT PAR ZONES DE L'INSTALLATION DE TREMPE PAR LOTS ET PROCÉDÉ DE NETTOYAGE PAR LOT AU MOYEN D'UN SYSTÈME DE NETTOYAGE

(30) Priorität: 21.12.2021 DE 102021214793
(43) Veröffentlichungstag der Anmeldung: 28.06.2023
(73) Patentinhaber: Continental Reifen Deutschland GmbH, 30175 Hannover (DE)
(72) Erfinder: Decina, Giordano, 30165 Hannover (DE)
(74) Vertreter: Continental Corporation

(56) Entgegenhaltungen:
- WO-A2-2012/047680
- KR-B1- 100 992 430
- US-A- 4 005 019
- US-A1- 2006 243 677

## Beschreibung

Die Erfindung betrifft eine Batch-Off Anlage mit einem Reinigungssystem zur abschnittsweisen Reinigung der Batch-Off Anlage gemäß Merkmalskombination des Patentanspruches 1. Des Weiteren betrifft die Erfindung ein Verfahren zur abschnittsweisen Reinigung in einer Batch-Off Anlage mit einem Reinigungssystem gemäß Merkmalskombination des Patentanspruches 10.

Batch-Off Anlagen sind Anlagen, die beispielsweise in Folge eines Walzwerks installiert sind. Mit Hilfe einer Batch-Off Anlage werden die mittels eines Kalander-Prozesses hergestellten Gummibahnen zum einen abgekühlt und zum anderen in einfach handhabbare Volumina gelegt.

Um die hergestellten Gummibahnen palettieren, falten bzw. aufeinanderlegen zu können, ist es notwendig, die Gummibahnen mit einem Antihaftmittel zu versehen. Das Auftragen eines Antihaftmittels erfolgt, indem die Gummibahn mittels einer Beschichtungsvorrichtung mit dem Antihaftmittel beschichtet wird. Die Beschichtungsvorrichtung umfasst im Wesentlichen einen Eintauchbehälter, durch den die Gummibahn geführt werden kann. In dem Eintauchbehälter ist ein G Lösung befindlich, die ein Antihaftmittel aufweist.

Es zeigt sich jedoch, dass die in dem Eintauchbehälter befindliche Lösung im Laufe des Beschichtungsverfahrens verunreinigt wird. Es sind mehrere Faktoren bekannt, die eine Verunreinigung der Antihaftmittel-Lösung begünstigen. Zum einen können durch mechanische Beanspruchungen Gummistücke bzw. Teile der Gummibahnen in die Antihaftmittellösung gelangen. Aufgrund von Verdunstung und Zirkulation im System kann außerdem das Antihaftmittel ausfallen und sich beispielsweise am Boden der Beschichtungsvorrichtung sammeln. Des Weiteren ist es bekannt, dass die chemischen Bestandteile, die nicht als Beschichtung auf die Gummibahnen gelangen, in Lösung gehen. Diese genannten Faktoren führen dazu, dass sich zum einen am Boden der Beschichtungsvorrichtung Ablagerungen bilden und zum anderen auf der Flüssigkeitsoberfläche bzw. Lösungsoberfläche Schaum bildet. Die Schaumbildung kann unter Umständen in einem derartigen Maß erfolgen, dass ein Aus- bzw. Überlaufen der Antihaftmittellösung in der Beschichtungsvorrichtung bzw. an einem Eintauchbehälter erfolgt.

Daher ist es bislang notwendig, manuell eine Batch-Off Anlage, insbesondere im Bereich der Beschichtungsvorrichtung durchzuführen. Hierzu ist es notwendig, die Batch-Off Anlage zu stoppen, während eine entsprechende Reinigung durchgeführt wird. Demnach kann während eines Reinigungsprozesses die Batch-Off Anlage nicht genutzt werden.

Im Lichte der vorgenannten Nachteile des bekannten Standes der Technik ist es Aufgabe der vorliegenden Erfindung, ein Reinigungssystem zur abschnittsweisen Reinigung einer Batch-Off Anlage anzugeben, die eine einfache abschnittsweise Reinigung, beispielsweise im Bereich einer Beschichtungsvorrichtung, einer Batch-Off Anlage ermöglicht. Vorzugsweise soll dies mit Hilfe des Reinigungssystems automatisierbar sein.

Des Weiteren ist es Aufgabe der vorliegenden Erfindung, mit Hilfe des Reinigungssystems Ressourcen wie beispielsweise Wasserresourcen zu schonen und einen möglichst hohen Anteil der Antihaftmittellösung wiederzuverwenden bzw. zu reinigen.

Des Weiteren ist es Aufgabe der vorliegenden Erfindung ein Verfahren anzugeben, mit dessen Hilfe eine zumindest abschnittsweise Reinigung einer Batch-Off Anlage automatisiert durchführbar ist.

Die Aufgabe wird im Hinblick auf eine Batch-Off Anlage mit einem Reinigungssystem durch den Gegenstand des Anspruches 1 gelöst. Im Hinblick auf ein Verfahren zur abschnittsweisen Reinigung einer Batch-Off Anlage wird die Aufgabe durch das Verfahren mit den Merkmalen des Anspruches 10 gelöst.

Zweckmäßige Fortbildungen des Erfindungsgedankens sind Gegenstand der von den Ansprüchen 1 und 10 abhängigen Ansprüche.

Der Erfindung liegt der Gedanke zu Grunde, dass ein erfindungsgemäßes Reinigungssystem zur zumindest abschnittsweisen Reinigung einer Batch-Off Anlage mindestens einen Auffangbehälter für ein zu sammelndes Gemisch aufweist.

Das zu sammelnde Gemisch enthält mindestens Antihaftmittelrückstände. Der mindestens eine Auffangbehälter weist mindestens eine Schaumabschöpfvorrichtung auf, wobei die Schaumabschöpfvorrichtung dazu ausgebildet ist, Schaumbeststandteile des Gemisches von Flüssigbestandteilen des Gemisches zu trennen und die Schaumbestandteile zu einem Schaumsammelbehälter zu transportieren. Mit Hilfe der Ausbildung einer Schaumabschöpfvorrichtung ist es möglich, eine abschnittsweise Reinigung, d. h. zumindest eine Reinigung in einem ausgewählten Abschnitt der Batch-Off Anlage durchzuführen.

Hierzu ist es nicht notwendig, den Betrieb der Batch-Off Anlage zu unterbrechen. Vielmehr kann mit Hilfe einer Schaumabschöpfvorrichtung während des Betriebs der Batch-Off Anlage eine derartige zumindest abschnittsweise Reinigung erfolgen, die weitere Reinigungs- und Separierschritte ohne eine Außerbetriebnahme der Batch-Off Anlage ermöglichen.

Das zu sammelnde Gemisch enthält neben Antihaftmittelrückständen vorzugsweise Wasser und/oder Materialabschnitte oder Materialpartikel der in der Batch-Off Anlage zu bearbeitenden Gummikomponente, insbesondere der Gummiban.

Bei dem Antihaftmittel selbst handelt es sich vorzugsweise um eine Mischung verschiedenster Chemikalien. Hierbei kann es sich um inerte Mineralien in Kombination mit Calziumstearat, Detergenzien, Antischaum- und Rostschutzmittel handeln. Die Antihaftmittelrückstände können somit Bestandteile der genannten Pulverzusammensetzungen enthalten.

Die Schaumabschöpfvorrichtung weist in einer bevorzugten Ausführungsform der Erfindung mindestens eine in Relation zur Horizontalen des Auffangbehälters geneigte Wandung oder Platte und einen bewegbaren, insbesondere horizontal bewegbaren, Spatel auf.

Als eine Horizontale des Auffangbehälters ist insbesondere eine derartige Achse zu verstehen, die parallel zu einer im Auffangbehälter gebildeten Flüssigkeitsoberfläche verläuft. Die geneigte Wandung oder die geneigte Platte ist somit zur Horizontalen sowie zur im Auffangbehälter ausgebildeten Flüssigkeitsoberfläche geneigt.

Als eine geneigte Wandung ist insbesondere eine Wandungs- oder Gehäuseabschnitt des Auffangsbehälters zu verstehen. In diesem Fall ist vorzugsweise ein Abschnitt des Auffangbehälters selbst geneigt ausgebildet.

Bei einer geneigten Platte handelt es sich vorzugsweise um ein separat ausgebildetes und mit dem Auffangbehälter verbundenes Bauteil.

Bei dem, insbesondere horizontal, bewegbaren Spatel handelt es sich beispielsweise um ein Kunststoffelement, das oberhalb der geneigten Oberfläche oder geneigten Platte bewegbar ist. Aufgrund der, insbesondere horizontalen, Bewegung des Spatels kann ein auf der Flüssigkeitsoberfläche ausgebildeter Schaumbestandteil des Gemisches entlang der geneigten Oberfläche oder geneigten Platte in Richtung eines Randabschnittes des Auffangbehälters geschoben werden, so dass der Schaumbestandteil des Gemisches von Flüssigbestandteilen des Gemisches getrennt und zu einem Schaumsammelbehälter transportiert werden kann. Es findet somit ein Abschöpfen des Schaumes am Auffangbehälter statt.

Der Spatel kann allgemein als ein längliches Bauteil bezeichnet oder ausgebildet sein, das eine Streichbewegung über einer Flüssigkeitsoberfläche ermöglicht.

Es ist möglich, dass das Reinigungssystem mehrere Auffangbehälter aufweist. Ein erster Auffangbehälter ist vorzugsweise unterhalb einer Beschichtungsvorrichtung der Batch-Off Anlage angeordnet. Bei der Beschichtungsvorrichtung kann es sich um ein Tauchbecken bzw. einen Eintauchbehälter handeln. Das im Eintauchbehälter bzw. im Tauchbecken befindliche Gemisch, das Antihaftmittelrückstände aufweist, kann somit in vertikaler Richtung nach unten in den ersten Auffangbehälter abgelassen werden.

Ein vorzugsweise mindestens zweiter Auffangbehälter kann unterhalb einer Abtropfzone der Batch-Off Anlage angeordnet sein. Als eine Abtropfzone ist der Trocknungsbereich einer Batch-Off Anlage zu verstehen, in dem das zunächst auf der Gummibahn befindliche Antihaftmittel noch abtropfen kann.

Mit Hilfe des erfindungsgemäßen Reinigungssystems ist es somit in vorteilhafter Weise möglich, auch überschüssiges Antihaftmittel, das von beschichteten Gummibahnen tropft, entsprechend zu sammeln und zu reinigen bzw. aufzubereiten.

In einer bevorzugten Ausführungsform der Erfindung weist der mindestens eine Auffangbehälter, insbesondere der erste Auffangbehälter, im Bodenabschnitt einen, insbesondere konusartig geformten, Sammelabschnitt auf, der dazu ausgebildet ist, Feststoffe des Gemisches zu sammeln. Bei den Feststoffen des Gemisches kann es sich um Pulverbestandteile des Antihaftmittels handeln. Des Weiteren kann es sich bei den Feststoffen um Partikel bzw. Materialabschnitte der in der Batch-Off Anlage zu behandelnden Gummibahn bzw. des Gummimaterials handeln.

Im Bodenabschnitt, der in vertikaler Richtung vorzugsweise gegenüberliegend zur Schaumabschöpfvorrichtung des Auffangbehälters ausgebildet ist, wird mit anderen Worten vorzugsweise eine derartige Vertiefung ausgebildet, die als Sammelabschnitt für die schwereren Feststoffe des Gemisches dienen kann.

Der mindestens eine Auffangbehälter, insbesondere der erste Auffangbehälter, kann mit einer Zentrifuge oder mit einem Fliehkraftabscheider oder mit einem Schneckenförderer fluidverbunden sein. Hierzu ist es möglich, dass der Auffangbehälter, insbesondere im Bereich des Sammelabschnitts, eine Feststoffaustragsöffnung aufweist, durch welche der gesammelte Feststoff aus dem Auffangbehälter entnommen und zu einer Zentrifuge oder einem Fliehkraftabscheider oder einem Schneckenförderer transportiert werden kann.

Es ist möglich, dass der Schneckenförderer im Auffangbehälter, insbesondere im Bereich des Sammelabschnitts, ausgebildet ist, so dass die im Sammelabschnitt gesammelten Feststoffe aus dem Auffangbehälter transportiert werden können.

Bei der Ausbildung eines Fliehkraftabscheiders ist es hingegen möglich, dass die gesammelten Feststoffe nochmals einer Reinigung unterzogen werden können, so dass eine nochmalige Trennung der Feststoffe von Flüssigbestandteilen ermöglicht wird.

In einer weiteren Ausführungsform der Erfindung kann der Schaumsammelbehälter eine Filtervorrichtung, insbesondere einen Siebabscheider, aufweisen, der dazu ausgebildet ist, Restflüssigkeit von dem im Schaumsammelbehälter befindlichen Schaumbestandteil zu trennen.

Der Schaumsammelbehälter kann mit einem Abfallsammelbehälter fluidverbunden sein, wobei der Abfallsammelbehälter vorzugsweise eine Filtervorrichtung, insbesondere einen Siebabscheider, aufweist, der dazu ausgebildet ist, Restflüssigkeit von den im Abfallsammelbehälter befindlichen Materialien zu trennen.

Es ist möglich, dass bei Ausbildung von mindestens zwei Auffangbehältern die jeweils abgetrennten Schaumbestandteile zu einem gemeinsamen Schaumsammelbehälter transportiert werden. Es ist also möglich, dass trotz Ausbilden mehrerer Auffangbehälter lediglich ein Schaumsammelbehälter im Reinigungssystem ausgebildet ist.

In einer weiteren Ausführungsform der Erfindung ist es möglich, dass in einer/der Abtropfzone der Batch-Off Anlage eine Spül- und/oder Sprühvorrichtung ausgebildet ist, die dazu ausgebildet ist, das in der Abtropfzone zu sammelnde Gemisch zu verdünnen.

Vorzugsweise ist der mindestens zweite Auffangbehälter, der in einer/der Abtropfzone ausgebildet ist, als ein länglicher Auffangbehälter ausgebildet, der in einem Abschnitt eine geneigte Wandung aufweist. Die geneigte Wandung wird somit bei einer derartigen Ausführungsform der Erfindung selbst vom Auffangbehälter gebildet. Da das zu sammelnde Gemisch im Bereich der Abtropfzone eine geringere Viskosität als beispielsweise im Bereich der Beschichtungsvorrichtung aufweist, ist es vorteilhaft, das in der Abtropfzone zu sammelnde Gemisch zu verdünnen, so dass ein entsprechendes Abschöpfen eines Schaums erfolgen kann.

Mit Hilfe des erfindungsgemäßen Reinigungssystems ist es möglich, die bislang vollständig zu entsorgenden Gemische, die als Abfallprodukte einer Batch-Off Anlage anfallen, mittels mehrerer Komponenten, die vom Reinigungssystem umfasst sind, zu reinigen. Es ist möglich, die dadurch abgetrennten Flüssigbestandteile des gesammelten Gemisches nochmals in der Batch-Off Anlage zu verwenden.

Der Anteil an tatsächlich zu entsorgenden Feststoffanteilen wird erheblich verringert.

Da die Batch-Off Anlage während eines durchzuführenden Reinigungsvorganges nicht außer Betrieb genommen werden muss, können weitere Kosten eingespart werden. Des Weiteren werden aufgrund der durchführbaren Reinigungsvorgänge mittels des Reinigungssystems erhebliche Mengen an Wasser eingespart, die bislang zum Spülen bzw. Reinigen der Batch-Off Anlage verwendet werden müssen.

Ein weiterer Aspekt der Erfindung betrifft ein Verfahren zur abschnittsweisen Reinigung in einer Batch-Off Anlage mit einem Reinigungssystem. Das erfindungsgemäße Verfahren sieht vor, dass zumindest abschnittsweise ein Gemisch, das Antihaftmittelrückstände enthält, in dem mindestens einen Auffangbehälter gesammelt wird, wobei mittels der erfindungsgemäß ausgebildeten Schaumabschöpfvorrichtung, vorzugsweise regelmäßig, Schaumbestandteile des Gemisches von Flüssigbestandteilen des Gemisches getrennt und die Schaumbestandteile in einen Schaumsammelbehälter transportiert werden.

Vorzugsweise wird die Schaumabschöpfvorrichtung in regelmäßigen Zeitintervallen aktiviert, wobei das Zeitintervall 20 min bis 240 min, insbesondere 30 min bis 120 min, insbesondere 45 min bis 80 min, beträgt.

Sofern das Reinigungssystem mehrere Auffangbehälter mit jeweils ausgebildeten Schaumabschöpfvorrichtungen aufweist, ist es möglich, dass die jeweiligen Schaumabschöpfvorrichtungen parallel oder zeitlich versetzt zueinander aktiviert werden.

Der Vorteil einer zeitlich versetzten Aktivierung mehrerer Schaumabschöpfvorrichtungen besteht darin, dass die jeweils dadurch gesammelten Schaumbestandteile fortlaufend gereinigt werden können. Die Nachbehandlungen bzw. nachfolgenden Reinigungsschritte im Zusammenhang mit den jeweils abgeschöpften Schaumbestandteilen, können hinsichtlich der jeweils kleineren angesammelten Mengen an Schaumbestandteilen schneller durchgeführt werden.

Vorteile und Zweckmäßigkeiten der Erfindung ergeben sich im Übrigen aus der Beschreibung von Ausführungsbeispielen anhand er Figuren. Diese zeigen:
- Fig. 1: eine erste Ausführungsform eines erfindungsgemäßen Reinigungssystems; und
- Fig. 2: eine weitere Ausführungsform eines erfindungsgemäßen Reinigungssystems.

Im Folgenden werden für gleiche und gleich wirkende Teile die gleichen Bezugsziffern verwendet.

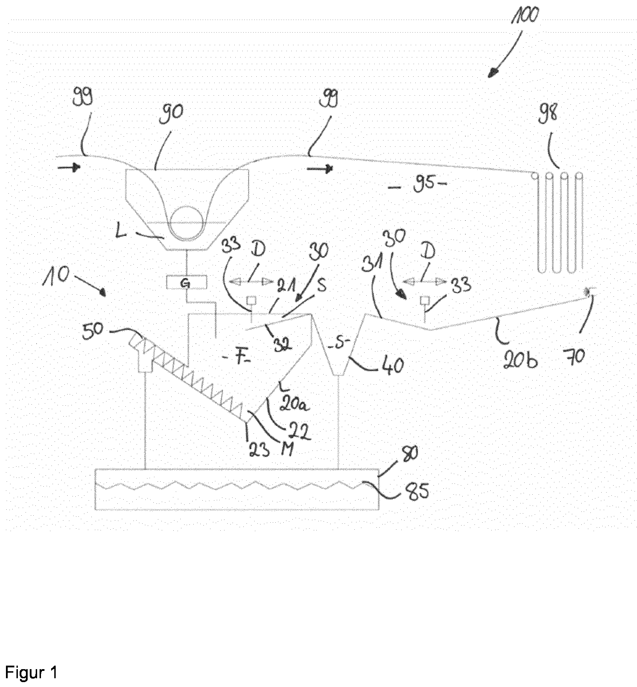

Fig. 1 zeigt schematisch den Grundaufbau eines erfindungsgemäßen Reinigungssystems 10 zur abschnittsweisen Reinigung einer Batch-Off Anlage 100. In der Batch-Off Anlage 100 wird eine Gummibahn 99 gekühlt und mit einem Antihaftmittel beschichtet, so dass die Gummibahn 99 in einer gestapelten bzw. gefalteten Form 98 weitertransportiert bzw. verarbeitet werden kann.

Um die Gummibahn 99 mit einem Antihaftmittel zu beschichten, weist die Batch-Off Anlage 100 eine Beschichtungsvorrichtung 90 auf. Die Beschichtungsvorrichtung 90 ist als eine Art Tauchbecken ausgebildet, durch welches das Gummiband 99 geführt werden kann. In dem Tauchbecken befindet sich eine Antihaftmittellösung L, so dass die Gummibahn 99 mit entsprechendem Antihaftmittel beschichtet werden kann. Bei der Antihaftmittellösung handelt es sich um eine Mischung aus Wasser und Antihaftmittel, wobei das Antihaftmittel beispielsweise in einer Konzentration von 2 bis 4 Gew.-% gemessen an der Gesamtmischung vorliegt.

In einem Auffangbehälter 20a wird ein Gemisch G gesammelt, das Antihaftmittelrückstände enthält. Neben Antihaftmittelrückständen können in dem Gemisch G beispielsweise Gummibestandteile bzw. Gummipartikel befindlich sein.

Der Auffangbehälter 20a weist des Weiteren eine Schaumabschöpfvorrichtung 30 auf. Die Schaumabschöpfvorrichtung 30 weist mindestens eine in Relation zur Horizontalen 21 des Auffangbehälters 20a geneigte Platte 32 und einen bewegbaren Spatel 33 auf. Der Spatel 33 kann in horizontaler Richtung in Bewegungsrichtung D, wie dies durch den Pfeil dargestellt ist, bewegt werden.

Mit Hilfe des horizontal bewegbaren Spaltes 33 kann ein Schaumbestandteil S des Gemisches G von Flüssigbestandteilen F des Gemisches G getrennt und zu einem Schaumsammelbehälter 40 transportiert werden. Der erste Auffangbehälter 20a ist in vertikaler Richtung unterhalb der Beschichtungsvorrichtung 90 angeordnet.

Das erfindungsgemäße Reinigungssystem 10 weist in der dargestellten Ausführungsform einen zweiten Auffangbehälter 20b auf. Der zweite Auffangbehälter 20b ist in vertikaler Richtung unterhalb der Abtropfzone 95 der Batch-Off Anlage 100 angeordnet. In der Abtropfzone 95 können sich Tropfen des Antihaftmittels von der beschichteten Gummibahn 99 lösen.

Mit Hilfe des zweiten Auffangbehälters 20b können diese Antihaftmitteltropfen aufgefangen werden. Der zweite Auffangbehälter 20b weist eine geneigte Wandung 31 auf. Die geneigte Wandung 31 ist Teil der Schaumabschöpfvorrichtung 30. Des Weiteren ist auch im Zusammenhang mit dem zweiten Auffangbehälter 20b ein Spalte 33 ausgebildet. Der Spatel 33 kann ebenfalls in Bewegungsrichtung D bewegt werden. Bei einer Bewegung des Spatels 33 nach links kann somit ein Schaumbestandteil S zu dem Schaumsammelbehälter 40 transportiert werden. Ein Flüssigbestandteil F des Gemisches G verbleibt hingegen zunächst im zweiten Auffangbehälter 20b.

Im ersten Auffangbehälter 20a ist die geneigte Platte 32 als separates Bauteil ausgebildet. Mit anderen Worten ist es in diesem Zusammenhang zur Bildung einer Schaumabschöpfvorrichtung 30 notwendig, neben der Ausbildung eines Spatels 33 eine separate Platte 32 auszubilden.

Im Zusammenhang mit dem zweiten Auffangbehälter 20b ist eine Wandung des Auffangbehälters 20b selbst als geneigte Oberfläche bzw. geneigte Wandung 31 ausgebildet. Somit ist hier nicht das Ausbilden einer separaten Platte notwendig.

Um eine bessere Abschöpfung bzw. eine bessere Trennung des Schaumbestandteils des Gemisches vom Flüssigbestandteil F des Gemisches G zu ermöglichen, ist im Bereich des zweiten Auffangbehälters 20b vorzugsweise eine Sprühvorrichtung 70 ausgebildet, so dass die vom zweiten Auffangbehälter 20b gesammelten Antihaftmitteltropfen verdünnt werden können.

In dem ersten Auffangbehälter 20a liegt die Konzentration des Antihaftmittel im Schaumbestandteil S beispielsweise bei in etwa 50 %.

Der erste Auffangbehälter 20a weist im Bodenabschnitt 22 einen Sammelabschnitt 23 auf. Der Sammelabschnitt 23 ist dazu ausgebildet, Feststoffe M des Gemisches G zu sammeln. Der Sammelabschnitt 23 wird beispielsweise durch eine konusartige Form des Bodenabschnittes 22 gebildet. Der Sammelabschnitt 23 kann auch als Vertiefung des Auffangbehälters 20a bezeichnet werden, in dem sich Feststoffe M des Gemisches G sammeln.

In der in Fig. 1 dargestellten Ausführungsform weist das Reinigungssystem 10 einen Schneckenförderer 50 auf, mit dessen Hilfe die Feststoffe M aus dem ersten Auffangbehälter 20a transportiert werden können. Die Feststoffe M werden vorzugsweise zu einem Abfallsammelbehälter 80 transportiert. Dieser Abfallsammelbehälter kann eine Filtervorrichtung, insbesondere einen Siebabscheider 85 aufweisen, der dazu ausgebildet ist, Restflüssigkeit von den im Abfallsammelbehälter 80 befindlichen Materialien zu trennen.

Bei dem Feststoff M kann es sich beispielsweise um Ablagerung des ausgefällten Antihaftpulvers sowie um Gummimischungsteilchen handeln. Das ausgefällte Antihaftpulver kann in diesem Stadium in einer Konzentration von ca. 75 % vorliegen.

Mit Hilfe des Abfallsammelbehälters 80 und dem zusätzlich ausgebildeten Siebabscheider 85 wird es ermöglicht, nochmals Restflüssigkeit von gesammelten Abfallstoffen zu trennen, so dass diese Restflüssigkeit in den Batch-Off Anlagenkreislauf zurückgeführt werden kann.

Vorzugsweise wird in dem Abfallsammelbehälter 80 auch der Schaumbestandteil S des Schaumsammelbehälters 40 gesammelt und nochmals mit Hilfe des Siebabscheiders 85 getrennt.

In einer weiteren Ausführungsform der Erfindung ist es möglich, dass der Schaumsammelbehälter 40 selbst eine Filtervorrichtung, insbesondere einen Siebabscheider, aufweist.

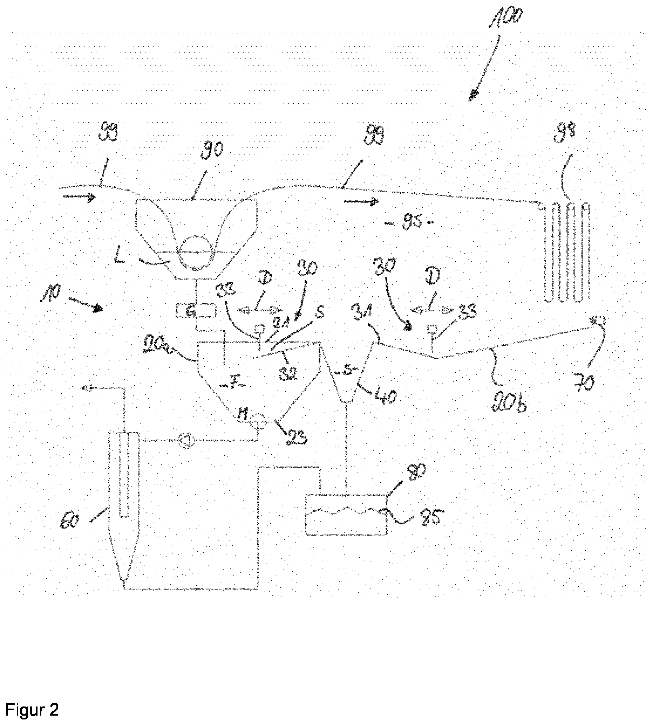

In Fig. 2 ist eine weitere Ausführungsform der Erfindung dargestellt. Diese Ausführungsform des Reinigungssystems 10 unterscheidet sich lediglich in der alternativen Ausbildung eines Fliehkraftabscheiders 60 anstelle eines Schneckenförderers 50.

Mit Hilfe des Fliehkraftabscheiders 60 kann der im Auffangbehälter 20a gesammelte Feststoff M nochmals hinsichtlich der Flüssig- und Feststoffanteile getrennt werden. Die abgetrennten Flüssiganteile können in die Batch-Off Anlage rückgeführt werden. Die mittels des Fliehkraftabscheiders 60 abgetrennten Feststoffe können hingegen zum Abfallsammelbehälter 80 transportiert werden. Hier kann mit Hilfe eines Siebabscheiders 85 eine nochmalige Trennung bzw. Reinigung durchgeführt werden.

Die Ausführung der Erfindung ist nicht auf die oben beschriebenen Beispiele und erwähnten Aspekte beschränkt, sondern ebenso in einer Vielzahl von Abwandlungen möglich, die im Schutzbereich der Ansprüche liegen.

### Bezugszeichenliste

- 10: Reinigungssystem
- 20a, 20b: Auffangbehälter
- 21: Horizontale des Auffangbehälters
- 22: Bodenabschnitt Auffangbehälter
- 23: Sammelabschnitt
- 30: Schaumabschöpfvorrichtung
- 31: geneigte Wandung
- 32: geneigte Platte
- 33: Spatel
- 40: Schaumsammelbehälter
- 50: Schneckenförderer
- 60: Fliehkraftabscheider
- 70: Sprühvorrichtung
- 80: Abfallsammelbehälter
- 85: Siebabscheider
- 90: Beschichtungsvorrichtung
- 95: Abtropfzone
- 98: Stapel
- 99: Gummibahn
- 100: Batch-Off Anlage

- D: Bewegungsrichtung Spatel
- F: Flüssigbestandteil
- G: Gemisch
- L: Antihaftmittel-Lösung
- M: Feststoffe des Gemisches
- S: Schaumbestandteil

## Patentansprüche

1. Batch-Off Anlage (100) mit Reinigungssystem (10) zur abschnittsweisen Reinigung der Batch-Off Anlage (100),
wobei das Reinigungssystem (10) mindestens einen Auffangbehälter (20a, 20b) für ein zu sammelndes Gemisch (G), das mindestens Antihaftmittelrückstände enthält, und mindestens einen Schaumsammelbehälter (40) aufweist, wobei der mindestens eine Auffangbehälter (20a, 20b) mindestens eine Schaumabschöpfvorrichtung (30) aufweist, wobei die Schaumabschöpfvorrichtung (30) dazu ausgebildet ist, Schaumbestandteile (S) des Gemisches (G) von Flüssigbestandteilen (F) des Gemisches (G) zu trennen und die Schaumbestandteile (S) zu dem mindestens einen Schaumsammelbehälter (40) zu transportieren.

2. Batch-Off Anlage (100) mit Reinigungssystem (10) nach Anspruch 1,
**dadurch gekennzeichnet, dass**
die Schaumabschöpfvorrichtung (30) mindestens eine in Relation zur Horizontalen (21) des Auffangbehälters (20a, 20b) geneigte Wandung (31) oder geneigte Platte (32) und einen bewegbaren, insbesondere horizontal bewegbaren, Spatel (33) aufweist.

3. Batch-Off Anlage (100) mit Reinigungssystem (10) nach Anspruch 1 oder 2, **dadurch gekennzeichnet, dass**
ein erster Auffangbehälter (20a) unterhalb einer Beschichtungsvorrichtung (90) der Batch-Off Anlage (100) angeordnet ist.

4. Batch-Off Anlage (100) mit Reinigungssystem (10) nach Anspruch 3,
**dadurch gekennzeichnet, dass**
ein mindestens zweiter Auffangbehälter (20b) unterhalb in einer Abtropfzone (95) der Batch-Off Anlage (100) angeordnet ist.

5. Batch-Off Anlage (100) mit Reinigungssystem (10) nach einem der vorangegangenen Ansprüche,
**dadurch gekennzeichnet, dass**
der mindestens eine Auffangbehälter (20a, 20b), insbesondere der erste Auffangbehälter (20a), im Bodenabschnitt (22) einen, insbesondere konusartig geformten, Sammelabschnitt (23) aufweist, der dazu ausgebildet ist, Feststoffe (M) des Gemisches (G) zu sammeln.

6. Batch-Off Anlage (100) mit Reinigungssystem (10) nach Anspruch 5,
**dadurch gekennzeichnet, dass**
der mindestens eine Auffangbehälter (20a, 20b), insbesondere der erste Auffangbehälter (20a), mit einer Zentrifuge oder mit einem Fliehkraftabscheider (60) oder mit einem Schneckenförderer (50) fluidverbunden ist.

7. Batch-Off Anlage (100) mit Reinigungssystem (10) nach einem der vorangegangenen Ansprüche,
**dadurch gekennzeichnet, dass**
der Schaumsammelbehälter (40) eine Filtervorrichtung, insbesondere einen Siebabscheider, aufweist, der dazu ausgebildet ist, Restflüssigkeit von dem im Schaumsammelbehälter (40) befindlichen Schaumbestandteil (S) zu trennen.

8. Batch-Off Anlage (100) mit Reinigungssystem (10) nach einem der vorangegangenen Ansprüche,
**dadurch gekennzeichnet, dass**
der Schaumsammelbehälter (40) mit einem Abfallsammelbehälter (80) fluidverbunden ist, wobei der Abfallsammelbehälter (80) vorzugsweise eine Filtervorrichtung, insbesondere einen Siebabscheider (85), aufweist, der dazu ausgebildet ist, Restflüssigkeit von den im Abfallsammelbehälter (80) befindlichen Materialipartikel zu trennen.

9. Batch-Off Anlage (100) mit Reinigungssystem (10) nach einem der vorangegangenen Ansprüche,
**gekennzeichnet durch**
eine in einer/der Abtropfzone (95) der Batch-Off Anlage (100), ausgebildete Spül- und/oder Sprühvorrichtung (70), die dazu ausgebildet ist, das in der Abtropfzone (95) zu sammelnde Gemisch (G) zu verdünnen.

10. Verfahren zur abschnittsweisen Reinigung in einer Batch-Off Anlage (100) mit einem Reinigungssystem (10) nach einem der Ansprüche 1 bis 9,
**dadurch gekennzeichnet, dass**
zumindest abschnittsweise Gemisch (G), das Antihaftmittelrückstände enthält, in dem mindestens einen Auffangbehälter (20a, 20b) gesammelt wird, wobei mittels der Schaumabschöpfvorrichtung (30), vorzugsweise regelmäßig, Schaumbestandteile (S) des Gemisches (G) von Flüssigbestandteilen (F) des Gemisches (G) getrennt und die Schaumbestandteile (S) in einen Schaumsammelbehälter (40) transportiert werden.

11. Verfahren nach Anspruch 10,
**dadurch gekennzeichnet, dass**
die Schaumabschöpfvorrichtung (30) in regelmäßigen Zeitintervallen aktiviert wird, wobei der Zeitintervall 20 min - 240 min, insbesondere 30 min - 120 min, insbesondere 45 min - 80 min, beträgt.

## Claims

1. Batch-off installation (100) having a cleaning system (10) for the sectional cleaning of the batch-off installation (100),
wherein the cleaning system (10) has at least one collecting container (20a, 20b) for a mixture (G) to be collected, which contains at least anti-adhesive residues, and at least one foam collecting container (40), wherein the at least one collecting container (20a, 20b) has at least one foam skimming device (30), wherein the foam skimming device (30) is designed to separate foam constituents (S) of the mixture (G) from liquid constituents (F) of the mixture (G) and to transport the foam constituents (S) to the at least one foam collecting container (40).

2. Batch-off installation (100) having a cleaning system (10) according to Claim 1,
**characterized in that**
the foam skimming device (30) has at least one wall (31) or plate (32) inclined in relation to the horizontal (21) of the collecting container (20a, 20b) and a movable, in particular horizontally movable, spatula (33).

3. Batch-off installation (100) having a cleaning system (10) according to Claim 1 or 2,
**characterized in that**
a first collecting container (20a) is arranged below a coating device (90) of the batch-off system (100).

4. Batch-off installation (100) having a cleaning system (10) according to Claim 3,
**characterized in that**
an at least second collecting container (20b) is arranged below in a drip zone (95) of the batch-off installation (100).

5. Batch-off installation (100) having a cleaning system (10) according to any of the preceding claims,
**characterized in that**
the at least one collecting container (20a, 20b), in particular the first collecting container (20a), has, in the bottom section (22), an, in particular conically shaped, collecting section (23), which is designed to collect solids (M) of the mixture (G).

6. Batch-off installation (100) having a cleaning system (10) according to Claim 5,
**characterized in that**
the at least one collecting container (20a, 20b), in particular the first collecting container (20a), is fluidically connected to a centrifuge or to a centrifugal separator (60) or to a screw conveyor (50).

7. Batch-off installation (100) having a cleaning system (10) according to any of the preceding claims,
**characterized in that**
the foam collecting container (40) has a filter device, in particular a screen separator, which is designed to separate residual fluid from the foam constituent (S) located in the foam collecting container (40).

8. Batch-off installation (100) having a cleaning system (10) according to any of the preceding claims,
**characterized in that**
the foam collecting container (40) is fluidically connected to a waste collecting container (80), wherein the waste collecting container (80) preferably has a filter device, in particular a screen separator (85), which is designed to separate residual fluid from the material particles located in the waste collecting container (80).

9. Batch-off installation (100) having a cleaning system (10) according to any of the preceding claims,
**characterized by**
a flushing and/or spraying device (70) which is formed in a/the drip zone (95) of the batch-off installation (100) and is designed to dilute the mixture (G) to be collected in the drip zone (95).

10. Method for sectional cleaning in a batch-off installation (100) having a cleaning system (10) according to any of Claims 1 to 9,
**characterized in that**
mixture (G), which contains anti-adhesive residues, is collected in the at least one collecting container (20a, 20b) at least in portions, wherein foam constituents (S) of the mixture (G) are, preferably regularly, separated from liquid constituents (F) of the mixture (G) by means of the foam skimming device (30) and the foam constituents (S) are transported into a foam collecting container (40).

11. Method according to Claim 10,
**characterized in that**
the foam skimming device (30) is activated at regular time intervals,
wherein the time interval is 20 min - 240 min, in particular 30 min -120 min, in particular 45 min - 80 min.

## Revendications

1. Installation de coulée par lots (100), comprenant un système de nettoyage (10) pour le nettoyage par endroits de l'installation de coulée par lots (100),
dans laquelle le système de nettoyage (10) présente au moins un récipient collecteur (20a, 20b) pour un mélange (G) à collecter qui contient au moins des résidus d'un produit antiadhésif et au moins un récipient collecteur d'écume (40), dans lequel ledit au moins un récipient collecteur (20a, 20b) présente au moins un dispositif d'écumage (30), dans lequel le dispositif d'écumage (30) est réalisé pour séparer des composants d'écume (S) du mélange (G) des composants liquides (F) du mélange (G) et pour transporter les composants d'écume (S) jusqu'audit au moins un récipient collecteur d'écume (40).

2. Installation de coulée par lots (100), comprenant un système de nettoyage (10), selon la revendication 1,
**caractérisée en ce que**
le dispositif d'écumage (30) présente au moins une paroi (31) ou une plaque (32) inclinée par rapport à l'horizontale (21) du récipient collecteur (20a, 20b), et une spatule (33) mobile, en particulier mobile horizontalement.

3. Installation de coulée par lots (100), comprenant un système de nettoyage (10), selon la revendication 1 ou 2,
**caractérisée en ce que**
un premier récipient collecteur (20a) est disposé au-dessous d'un dispositif de revêtement (90) de l'installation de coulée par lots (100).

4. Installation de coulée par lots (100), comprenant un système de nettoyage (10), selon la revendication 3,
**caractérisée en ce que**
un au moins deuxième récipient collecteur (20b) est disposé au-dessous d'une zone d'égouttage (95) de l'installation de coulée par lots (100).

5. Installation de coulée par lots (100), comprenant un système de nettoyage (10), selon l'une quelconque des revendications précédentes,
**caractérisée en ce que**
ledit au moins un récipient collecteur (20a, 20b), en particulier le premier récipient collecteur (20a), présente dans la partie de fond (22) une partie de collecte (23), en particulier de forme conique, qui est réalisé pour collecter des matières solides (M) du mélange (G).

6. Installation de coulée par lots (100), comprenant un système de nettoyage (10), selon la revendication 5,
**caractérisée en ce que**
ledit au moins récipient collecteur (20a, 20b), en particulier le premier récipient collecteur (20a), est en liaison fluidique avec une centrifugeuse ou un cyclone (60) ou une vis d'alimentation (50).

7. Installation de coulée par lots (100), comprenant un système de nettoyage (10), selon l'une quelconque des revendications précédentes,
**caractérisée en ce que**
le récipient collecteur d'écume (40) présente un dispositif de filtrage, en particulier un séparateur tamiseur, qui est réalisé pour séparer un liquide résiduel du composant d'écume (S) se trouvant dans le récipient collecteur d'écume (40).

8. Installation de coulée par lots (100), comprenant un système de nettoyage (10), selon l'une quelconque des revendications précédentes,
**caractérisée en ce que**
le récipient collecteur d'écume (40) est en liaison fluidique avec un récipient collecteur de déchets (80), le récipient collecteur de déchets (80) présentant de préférence un dispositif de filtrage, en particulier un séparateur tamiseur (85), qui est réalisé pour séparer un liquide résiduel des particules de matière se trouvant dans le récipient collecteur de déchets (80).

9. Installation de coulée par lots (100), comprenant un système de nettoyage (10), selon l'une quelconque des revendications précédentes,
**caractérisée par**
un dispositif de rinçage et/ou de pulvérisation (70) réalisé dans une zone d'égouttage (95) de l'installation de coulée par lots (100) et qui est réalisé pour diluer le mélange (G) à collecter dans la zone d'égouttage (95).

10. Procédé de nettoyage par endroits dans une installation de coulée par lots (100) à l'aide d'un système de nettoyage (10) selon l'une quelconque des revendications 1 à 9,
**caractérisée en ce que**
au moins par endroits, un mélange (G) contenant des résidus d'un produit antiadhésif est collecté dans ledit au moins un récipient collecteur (20a, 20b), dans lequel le dispositif d'écumage (30) permet de séparer, de préférence régulièrement, des composants d'écume (S) du mélange (G) des composants liquides (F) du mélange (G) et de transporter les composants d'écume (S) dans un récipient collecteur d'écume (40).

11. Procédé selon la revendication 10,
**caractérisée en ce que**
le dispositif d'écumage (30) est activé à intervalles de temps réguliers,
l'intervalle de temps étant de 20 min à 240 min, en particulier de 30 min à 120 min, en particulier de 45 min à 80 min.
